# EUROPÄISCHE PATENTANMELDUNG

(11) **EP 3 782 766 A1**
(43) Veröffentlichungstag der Anmeldung: **24.02.2021**
(21) Anmeldenummer: 19192219.4
(22) Anmeldetag: 19.08.2019
(51) Int. Cl.: B25D 16/00, F16H 1/32

(54) **HANDWERKZEUGMASCHINE**

(71) Anmelder: Hilti Aktiengesellschaft, 9494 Schaan (LI)
(72) Erfinder: Knyrim, Maximilian, 89584 Ehingen (DE); Unsöld, Michael, 86929 Penzing (DE)
(74) Vertreter: Hilti Aktiengesellschaft Corporate Intellectual Property

(57) **Zusammenfassung**

Handwerkzeugmaschine mit einer Werkzeugaufnahme zum Halten eines schlagenden und drehenden Werkzeugs auf einer Arbeitsachs, einem Elektromotor, einem Schlagwerk, das einen längs der Arbeitsachse periodisch bewegten Schläger aufweist, und mit einem Drehantrieb, der eine die Werkzeugaufnahme tragende Spindel um die Arbeitsachse drehend antreibt, wobei der Drehantrieb ein mit dem Elektromotor verbundenes, untersetzendes Exzentergetriebe aufweist und die Spindel mit dem Exzentergetriebe gekoppelt ist.

## Beschreibung

Die vorliegende Erfindung betrifft eine Handwerkzeugmaschine mit einer Werkzeugaufnahme zum Halten eines schlagenden und drehenden Werkzeugs auf einer Arbeitsachse. Die Handwerkzeugmaschine ist ausgestattet mit einem Elektromotor, einem Schlagwerk, das einen längs der Arbeitsachse periodisch bewegten Schläger aufweist, und mit einem Drehantrieb, der eine die Werkzeugaufnahme tragende Spindel um die Arbeitsachse drehend antreibt.

Eine solche Handwerkzeugmaschine, die beispielweise als Bohrhammer ausgebildet sein kann, ist aus der EP 3 181 301 A1 bekannt.

Es ist Aufgabe der vorliegenden Erfindung eine Handwerkzeugmaschine, insbesondere einen Bohrhammer oder Kombihammer, mit einem vergleichsweise kompakten und robusten Drehantrieb bereitzustellen.

Die Aufgabe wird dadurch gelöst, dass der Drehantrieb ein mit dem Elektromotor verbundenes, untersetzendes Exzentergetriebe aufweist und die Spindel mit dem Exzentergetriebe gekoppelt ist.

Die Erfindung schliesst die Erkenntnis ein, dass, wenn das Bohrwerkzeug (schlagendes und drehendes Werkzeug) variiert wird, andere Bohrerdurchmesser oder Bohrerarten mitunter eine langsamere Drehzahl der Werkzeugaufnahme für ein bestmögliches Bohrverhalten erfordern. Dies macht ein vergleichsweise stärker untersetzendes Getriebe erforderlich, welches - zumindest bei den Handwerkzeugmaschinen des Standes der Technik - den Platzbedarf, die Kosten, die Komponentenanzahl, die Komplexität und das Gewicht dieser Maschinen nachteiligerweise erhöht.

Bei der erfindungsgemäßen Handwerkzeugmaschine, die als Bohrhammer oder Kombihammer ausgebildet sein kann, kommt ein Exzentergetriebe (auch Zykloidgetriebe oder Kreisschubgetriebe) zum Einsatz. Dies anstatt von Stirnrädern und/oder Kegelrädern, die bei Handwerkzeugmaschinen des Standes der Technik ausschließlich oder zumindest überwiegend zum Einsatz kommen.

Dadurch kann ein vergleichsweise kompakter und robuster Drehantrieb bereitgestellt werden.

Es hat sich als vorteilhaft herausgestellt, wenn das Exzentergetriebe ein innenverzahntes Hohlrad und ein außenverzahntes Innenrad aufweist. Das Hohlrad kann bezüglich des Elektromotors gestellfest angeordnet sein. In einer besonders bevorzugten Ausgestaltung wird das Innenrad über einen drehbar gelagerten Exzenter angetrieben. Es hat sich als vorteilhaft herausgestellt, wenn das Exzentergetriebe eine Untersetzung von wenigstens 1:40, vorzugsweise von 1:50 aufweist.

In einer besonders bevorzugten Ausgestaltung weist das Exzentergetriebe ein drehstarre Kupplung auf, die ausgebildet ist einen durch den Exzenter bewirkten Radialversatz des Innenrads auszugleichen. Die Kupplung ist vorzugsweise als Parallelkurbelkupplung oder als Kreuzschieberkupplung ausgebildet.

Es hat sich als vorteilhaft herausgestellt, wenn das Schlagwerk eine Getriebekomponente zum Wandeln der Drehbewegung des Elektromotors in eine zu der Arbeitsachse parallele periodische Translationsbewegung aufweist. Vorzugsweise ist die Getriebekomponente mit dem Exzentergetriebe integriert.

Die Getriebekomponente kann ein Schlagwerks-Exzenterrad oder eine Taumelscheibe aufweisen, die koaxial zum Exzentergetriebe angeordnet und/oder einstückig mit einem Antriebsexzenter des Kreisschubgetriebes ausgebildet ist. Das Schlagwerks-Exzenterrad und der Antriebsexzenter des Kreisschubgetriebes können ein und dieselbe Komponente sein. Sowohl der Exzenter als auch ein Schlagwerks-Exzenterrad können durch ein und dieselbe Exzenterwelle angetrieben sein. Die Exzenterwelle und eine Kurbelwelle des Elektromotors können koaxial zueinander oder parallel versetzt zueinander angeordnet sein.

In einer weiteren bevorzugten Ausgestaltung ist der der Drehantrieb mit dem Schlagwerk synchronisiert. Das Schlagwerk kann einen mit der Getriebekomponente verbundenen Erreger und eine pneumatische Kammer aufweisen, wobei der Schläger vorzugsweise über die pneumatische Kammer an den Erreger angekoppelt ist.

Vorzugweise sind keine Kupplungen in dem Drehantrieb vorgesehen, welche eine Übertragung eines Drehmoments von dem Elektromotor auf die Spindel unterbrechen könnten.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel einer erfindungsgemäßen Handwerkzeugmaschine;
- Fig. 2: ein erstes bevorzugtes Ausführungsbeispiel eines Drehantriebs;
- Fig. 3: ein zweites bevorzugtes Ausführungsbeispiel eines Drehantriebs;
- Fig. 4: ein drittes bevorzugtes Ausführungsbeispiel eines Drehantriebs; und
- Fig. 5: eine Draufsicht auf ein Exzentergetriebe der Fig. 2 bis 5.

### Ausführungsbeispiele:

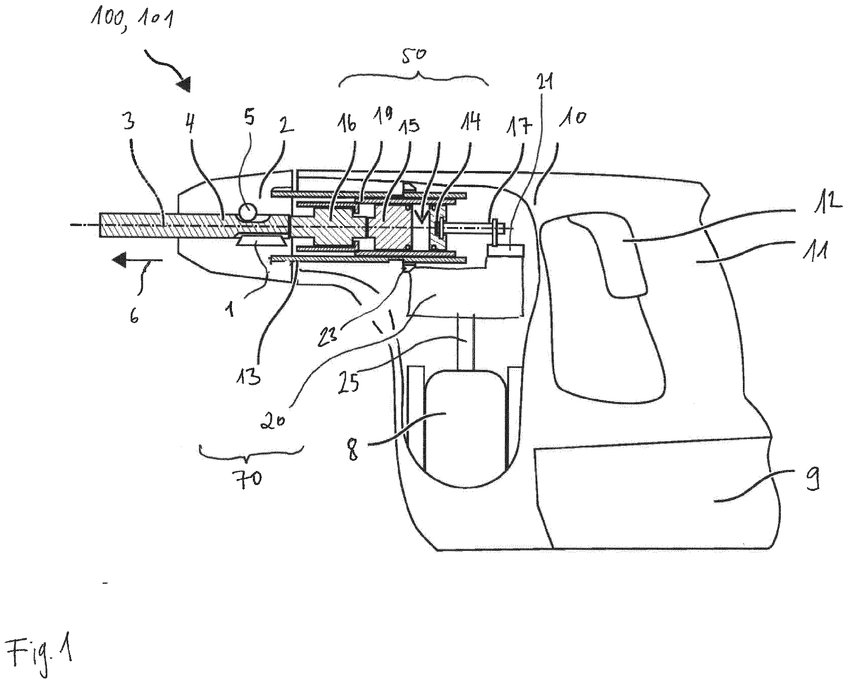

Ein bevorzugtes Ausführungsbeispiel einer erfindungsgemäßen Handwerkzeugmaschine 100 ist in Fig. 1 dargestellt. Fig. 1 zeigt einen Bohrhammer 101 als Beispiel für eine schlagende handgehaltene Handwerkzeugmaschine 100. Der Bohrhammer 101 hat eine Werkzeugaufnahme 2, in welchen koaxial zu einer Arbeitsachse 3 ein Bohrer, Meißel oder anderes schlagendes Werkzeug 4 eingesetzt und verriegelt werden kann. Der Bohrhammer 101 hat ein pneumatisches Schlagwerk 50, welches periodisch Schläge in einer Schlagrichtung 6 auf das Werkzeug 4 ausüben kann. Ein Drehantrieb 70 kann die Werkzeugaufnahme 2 kontinuierlich um die Arbeitsachse 3 drehen. Das pneumatische Schlagwerk 50 und der Drehantrieb sind von einem Elektromotor 8 angetrieben, welcher aus einem Akku 9 oder einer Netzleitung mit elektrischem Strom gespeist wird.

Das Schlagwerk 50 und der Drehantrieb 70 sind in einem Maschinengehäuse 10 angeordnet. Ein Handgriff 11 ist typischerweise an einer der Werkzeugaufnahme 2 abgewandten Seite des Maschinengehäuses 10 angeordnet. Der Anwender kann den Bohrhammer 101 mittels des Handgriffs 11 im Betrieb halten und führen. Ein zusätzlicher Hilfsgriff kann nahe der Werkzeugaufnahme 2 befestigt werden. An oder in der Nähe des Handgriffs 11 ist ein Betriebstaster 12 angeordnet, welchen der Anwender vorzugsweise mit der haltenden Hand betätigen kann. Der Elektromotor 8 wird durch Betätigen des Betriebstasters 12 eingeschaltet. Typischerweise dreht sich der Elektromotor 8 solange, wie der Betriebstaster 12 gedrückt gehalten ist.

Das Werkzeug 4 ist in der Werkzeugaufnahme 2 längs der Arbeitsachse 3 beweglich. Beispielsweise hat das Werkzeug 4 eine längliche Nut, in welche eine Kugel 5 oder ein anderer Sperrkörper der Werkzeugaufnahme 2 eingreift. Der Anwender hält das Werkzeug 4 in einer Arbeitsstellung, indem der Anwender das Werkzeug 4 mittelbar durch den Bohrhammer 101 an einen Untergrund anpresst.

Die Werkzeugaufnahme 2 ist an einer Spindel 13 des Drehantriebs 70 befestigt. Der Werkzeugaufnahme 2 kann sich gegenüber dem Maschinengehäuse 10 um die Arbeitsachse 3 drehen. Wenigstens eine Klaue 1 oder andere geeignete Mittel in der Werkzeugaufnahme 2 übertragen ein Drehmoment von der Werkzeugaufnahme 2 auf das Werkzeug 4.

Erfindungsgemäß weist der Drehantrieb 70 ein mit dem Elektromotor 8 verbundenes, untersetzendes Exzentergetriebe 20 auf, wobei die Spindel 13 mit dem Exzentergetriebe 20 gekoppelt ist. Das Exzentergetriebe 20 ist in Fig. 1 lediglich schematisch angedeutet und wird mit Bezug auf die weiteren Figuren im Detail erläutert.

Das pneumatische Schlagwerk 50 hat längs der Schlagrichtung 6 einen Erreger 14, einen Schläger 15 und einen Döpper 16. Der Erreger 14 wird mittels des Elektromotors 8 zu einer periodischen Bewegung längs der Arbeitsachse 3 gezwungen. Der Erreger 14 ist über eine Getriebekomponente 17 zum Wandeln der Drehbewegung des Elektromotors 8 in eine periodische, translatorische Bewegung entlang der Arbeitsachse 3 angebunden. Eine beispielhafte Getriebekomponente 17 beinhaltet ein Schlagwerks-Exzenterrad 21 oder eine Taumelscheibe. Eine Periode der translatorischen Bewegung des Erregers 14 ist durch die Drehzahl des Elektromotors 8 und ggf. ein Untersetzungsverhältnis in der Getriebekomponente 17 vorgeben.

Der Schläger 15 koppelt über eine Luftfeder an die Bewegung des Erregers 14 an. Die Luftfeder ist durch eine zwischen dem Erreger 14 und dem Schläger 15 abgeschlossene pneumatische Kammer 18 gebildet. Der Schläger 15 bewegt sich in die Schlagrichtung 6 bis der Schläger 15 auf den Döpper 16 aufschlägt. Der Döpper 16 liegt in der Schlagrichtung 6 an dem Werkzeug 4 an und überträgt den Schlag auf das Werkzeug 4. Die Periode der Bewegung des Schlägers 15 ist identisch zu der Periode der Bewegung des Erregers 14. Der Schläger 15 schlägt somit mit einer Schlagzahl, die gleich dem Inversen der Periode ist. Die optimale Schlagzahl ist durch die Masse des Schlägers 15 und die geometrischen Abmessungen der pneumatischen Kammer 18 vorgegeben. Eine optimale Schlagzahl kann im Bereich zwischen 25 Hz und 100 Hz liegen.

Das beispielhafte Schlagwerk 50 hat einen kolbenförmigen Erreger 14 und einen kolbenförmigen Schläger 15, die durch ein Führungsrohr 19 längs der Arbeitsachse 3 geführt sind. Der Erreger 14 und der Schläger 15 liegen mit ihren Mantelflächen an der Innenfläche des Führungsrohrs 19 an. Die pneumatische Kammer 18 ist durch den Erreger 14 und den Schläger 15 längs der Arbeitsachse 3 und durch das Führungsrohr 19 in radialer Richtung abgeschlossen. Dichtungsringe in den Mantelflächen von Erreger 14 und Schläger 15 können den luftdichten Abschluss der pneumatischen Kammer 18 verbessern.

Der Drehantrieb 70 beinhaltet die Spindel 13, welche koaxial zu der Arbeitsachse 3 angeordnet ist. Die Spindel 13 ist beispielsweise hohl, und das Schlagwerk 50 ist innerhalb der Spindel angeordnet. Die Werkzeugaufnahme 2 ist auf der Spindel 13 aufgesetzt. Die Werkzeugaufnahme 2 kann über einen Verschlussmechanismus lösbar oder dauerhaft mit der Spindel 13 verbunden sein. Die Spindel 13 ist über das untersetzendes Exzentergetriebe 20 an den Elektromotor 8, genauer gesagt über dessen Kurbelwelle 25, angebunden. Die Drehzahl der Spindel 13 ist geringer als die Drehzahl des Elektromotors 8.

Die Spindel 13 dreht sich vorzugsweise periodisch. Beispielsweise kann die Spindel 13 kontinuierlich via dem untersetzenden Exzentergetriebe 20 mit einer Drehzahl von weniger als 50 Umdrehungen pro Minute (U/min) gedreht werden. Vorzugsweise wird die Spindel 13 kontinuierlich via dem untersetzenden Exzentergetriebe 20 über eine an der Spindel 13 vorgesehene Kegelverzahnung 23 gedreht. Der Drehantrieb 70 ist mit dem Schlagwerk 50 synchronisiert.

Die Spindel 13 kann starr an den Elektromotor 8 angekoppelt sein. Eine Drehbewegung des Elektromotors 8 erzwingt eine Drehbewegung der Spindel 13. Vorzugweise sind keine Kupplungen in dem Drehantrieb 70 vorgesehen, welche eine Übertragung eines Drehmoments von dem Elektromotor 8 auf die Spindel 13 unterbrechen könnten.

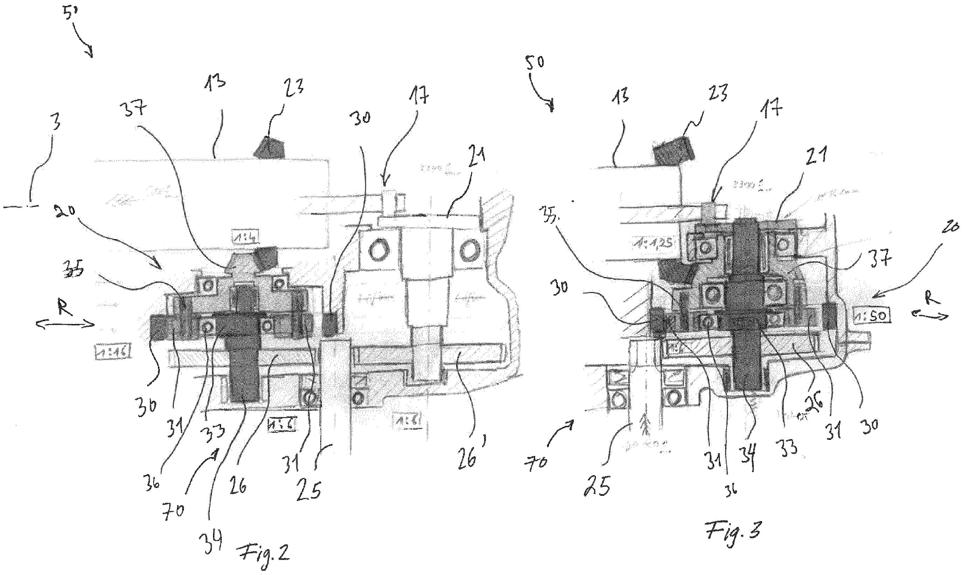

Fig. 2 zeigt nun ein erstes bevorzugtes Ausführungsbeispiel eines Drehantriebs 70, der in Fig. 1 lediglich schematisch innerhalb der Handwerkzeugmaschine 100 angedeutet ist.

Der Drehantrieb 70 weist ein über die Kurbelwelle 25 mit dem Elektromotor 8 verbundenes, untersetzendes Exzentergetriebe 20 auf. Dafür ist die Kurbelwelle 25 über ein Wellenzahnrad 26 mit einer Exzenterwelle 34 gekoppelt. Über das Wellenzahnrad 26 wird hier beispielhaft ein Übersetzungsverhältnis von 1:6 zwischen Kurbelwelle 25 und Exzenterwelle 34. Abtriebsseitig ist das Exzentergetriebe 20 über eine Kegelverzahnung 23 mit der Spindel 13 gekoppelt.

Das Exzentergetriebe 20 weist ein innenverzahntes Hohlrad 30 und ein außenverzahntes Innenrad 31 auf. Das Hohlrad 30 ist bezüglich des Elektromotors 8 gestellfest angeordnet. Das Innenrad 31 ist über einen drehbar gelagerten Exzenter 33 antreibbar. Der Exzenter 33 ist drehfest mit der Kurbelwelle 25 verbunden. Der Exzenter 33 und die Kurbelwelle 25 können einstückig miteinander ausgebildet sein.

Das Exzentergetriebe 20 weist ein drehstarre Kupplung 35 aufweist, die ausgebildet ist einen durch den Exzenter 33 bewirkten Radialversatz (Radiale Richtung R) des Innenrads 31 auszugleichen. In den Ausführungsbeispielen der Fig. 2 bis 5 ist die Kupplung 35 jeweils als Parallelkurbelkupplung ausgebildet. Die drehstarre Kupplung 35 ist einerseits mit dem Innenrad 31 und andererseits mit einem Abtriebskörper 37 gekoppelt. Der Abtriebskörper 37 ist wiederum über die Kegelverzahnung 23 (vgl. auch Fig. 1) mit der Spindel 13 gekoppelt. Über die Kegelverzahnung 23 wird hier beispielhaft ein Übersetzungsverhältnis von 1:4 zwischen Abtriebskörper 37 und Spindel 13 realisiert.

Das Exzentergetriebe 20 selbst weist beim Ausführungsbeispiel der Fig. 2 ein Übersetzungsverhältnis von 1:16 zwischen Innenrad 31 und Hohlrad 30 auf.

Wie bereits aus der Fig. 1 ersichtlich wird, weist das hier in Fig. 2 lediglich teilweise dargestellte Schlagwerk 50 eine Getriebekomponente 17 zum Wandeln der Drehbewegung des Elektromotors 8 in eine zu der Arbeitsachse 3 parallele periodische Translationsbewegung auf. Dafür beinhaltet die Getriebekomponente 17 ein Schlagwerks-Exzenterrad 21. Das Schlagwerks-Exzenterrad 21 ist über ein weiteres Wellenzahnrad 26' rotatorisch mit der Kurbelwelle 25 gekoppelt. Beispielhaft wir hier ein Übersetzungsverhältnis von 1:6 zwischen Kurbelwelle 25 und Schlagwerks-Exzenterrad 21 realisiert.

Ein zweites bevorzugtes Ausführungsbeispiel eines Drehantriebs 70 ist in Fig. 3 dargestellt. Bei diesem Ausführungsbeispiel ist die Getriebekomponente 17 nebst Schlagwerks-Exzenterrad 21 mit dem Exzentergetriebe 20 integriert bzw. zumindest teilintegriert. Dafür ist das Schlagwerks-Exzenterrad 21 koaxial zur Exzenterwelle 34 angeordnet. Sowohl der Exzenter 33 als auch das Schlagwerks-Exzenterrad 21 werden durch ein und dieselbe Exzenterwelle 34 angetrieben.

Gut zu erkennen ist, dass die Exzenterwelle 34, welche den Exzenter 33 antreibt, und die Kurbelwelle 25 des Elektromotors (hier nicht dargestellt) parallel versetzt zueinander angeordnet sind. Dabei wird hier beispielhaft, über ein Wellenzahnrad 26", wir ein Übersetzungsverhältnis von 1:6 zwischen Kurbelwelle 25 und Exzenterwelle 34 realisiert.

Über die Kegelverzahnung 23 wird hier beispielhaft ein Übersetzungsverhältnis von 1:1,25 zwischen Abtriebskörper 37 und Spindel 13 realisiert. Das Exzentergetriebe 20 selbst weist beim Ausführungsbeispiel der Fig. 3 ein Übersetzungsverhältnis von 1:50 zwischen Innenrad 31 und Hohlrad 30 auf. Hierbei treibt der Exzenter 33 das Innenrad 31 an, welches im gestellfesten Hohlrad 30 abwälzt. Durch die unterschiedliche Zähnezahl zwischen Hohlrad 30 und Innenrad 31 entsteht eine Drehbewegung. Für eine größtmögliche Übersetzung wird hier beispielhaft eine Zähnezahldifferenz von 1 angestrebt. Hierbei dreht das Innenrad 31 relativ zum gestellfesten Hohlrad 30 um einen Zahn weiter pro Exzenterdrehung. Somit vollführt das Innenrad 31 zwei überlagerte Bewegungen: Die exzentrische Taumelbewegung (in radialer Richtung R) und eine vergleichsweise langsame Drehbewegung.

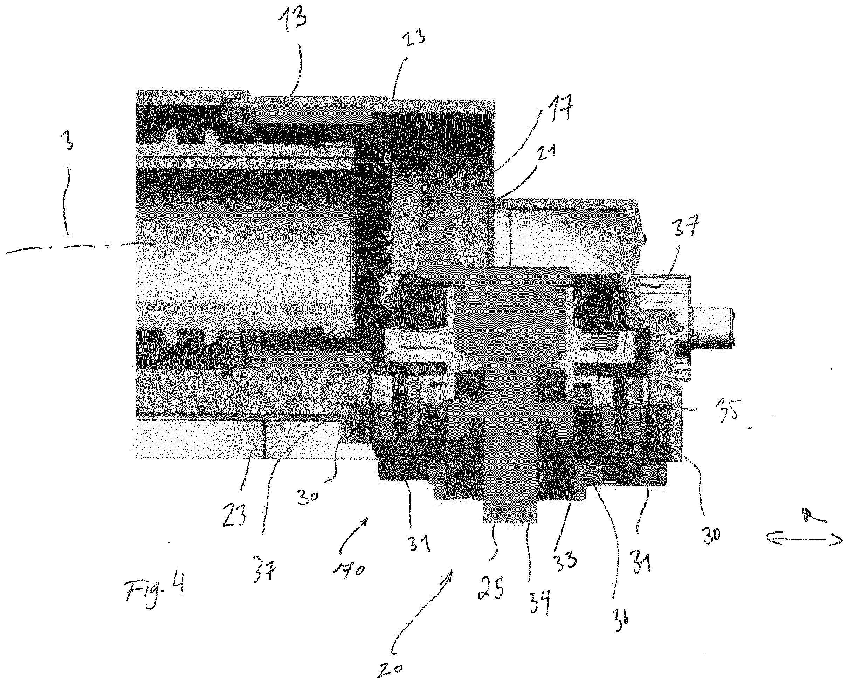

Ein drittes bevorzugtes Ausführungsbeispiel eines Drehantriebs 70 ist in Fig. 4 dargestellt. Bei diesem Ausführungsbeispiel ist die Getriebekomponente 17 nebst Schlagwerks-Exzenterrad 21 mit dem Exzentergetriebe 20 - im Vergleich zum Ausführungsbeispiel der Fig. 3 - weiter räumlich integriert. Dies wurde dadurch erreicht, dass die Exzenterwelle 34 identisch, oder zumindest koaxial zur Kurbelwelle 25 ausgebildet bzw. angeordnet ist. Wie beim Ausführungsbeispiel der Fig. 3 ist auch hier das Schlagwerks-Exzenterrad 21 koaxial zur Exzenterwelle 34 angeordnet. Sowohl der Exzenter 33 als auch das Schlagwerks-Exzenterrad 21 werden durch ein und dieselbe Exzenterwelle 34 angetrieben. Im Unterschied zu den Ausführungsbeispielen der Fig. 2 und Fig. 3 ist die eine Kegelverzahnung 23, über die eine Bewegung vom Abtriebskörper 37 auf die Spindel 13 erfolgt, stirnseitig auf an der Spindel 13 angeordnet. Auch beim Ausführungsbeispiel der Fig. 4 wird über die Getriebekomponente 16, die das Schlagwerks-Exzenterrad 21 beinhaltet, auf einen hier nicht dargestellten Erreger übertragen.

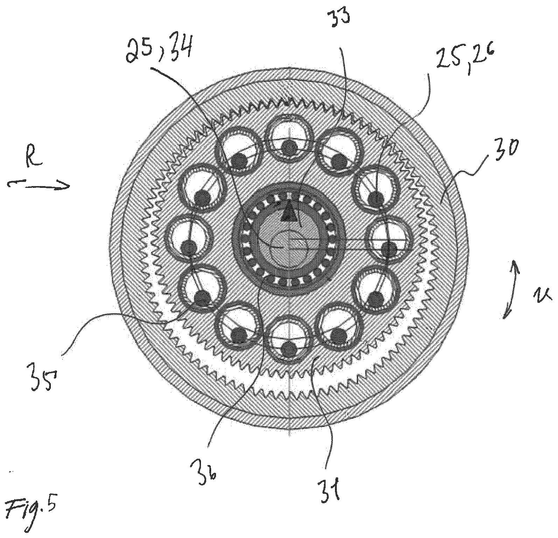

Fig. 5 zeigt schließlich eine Draufsicht auf das Exzentergetriebe 20, welches in den Ausführungsbeispielen der Fig. 2 bis 5 zum Einsatz kommt. Gut zu erkennen ist der im Zentrum angeordnete Exzenter 33, der über ein Kugellager 36 innerhalb des Innenrads 31 abgestützt ist. Der Exzenter wird über die Exzenterwelle 34 (einstückig mit der Kurbelwelle 25 in Fig. 4) angetrieben, wodurch das Innenrad 31 zwei überlagerte Bewegungen vollführt, nämlich eine exzentrische Taumelbewegung (in radialer Richtung R) und eine vergleichsweise langsame Drehbewegung (in Umfangsrichtung U). Das Hohlrad 30 ist bezüglich des Maschinengehäuses 10 (vgl. Fig. 1) der Handwerkzeugmaschine gestelltfest angeordnet. Die Exzenterwelle 34 ist (abgesehen vom Exzenter 33) koaxial zum Hohlrad 30 angeordnet. Gut zu erkennen ist auch die drehstarre Kupplung 35, die vorliegend als Parallelkurbelkupplung ausgebildet ist.

### Bezugszeichenliste

- 1: Klaue
- 2: Werkzeugaufnahme
- 3: Arbeitsachse
- 4: schlagendes Werkzeug
- 5: Kugel
- 6: Schlagrichtung
- 8: Elektromotor
- 9: Akku
- 10: Maschinengehäuse
- 11: Handgriff
- 12: Betriebstaster
- 13: Spindel
- 14: Erreger
- 15: Schläger
- 16: Döpper
- 17: Getriebekomponente
- 18: pneumatische Kammer
- 19: Führungsrohr
- 20: Exzentergetriebe
- 21: Schlagwerks-Exzenterrad
- 23: Kegelverzahnung
- 25: Kurbelwelle
- 26, 26', 26": Wellenzahnrad
- 30: Hohlrad
- 31: Innenrad
- 33: Exzenter
- 34: Exzenterwelle
- 35: drehstarre Kupplung
- 36: Kugellager
- 37: Abtriebskörper
- 50: Schlagwerk
- 70: Drehantrieb
- 100: Handwerkzeugmaschine
- 101: Bohrhammer

- R: radiale Richtung
- U: Umfangsrichtung

## Patentansprüche

1. Handwerkzeugmaschine (100), insbesondere Bohrhammer (101), mit einer Werkzeugaufnahme (2) zum Halten eines schlagenden und drehenden Werkzeugs (4) auf einer Arbeitsachse (3), einem Elektromotor (8), einem Schlagwerk (50), das einen längs der Arbeitsachse (3) periodisch bewegten Schläger (15) aufweist, und mit einem Drehantrieb (70), der eine die Werkzeugaufnahme (2) tragende Spindel (13) um die Arbeitsachse (3) drehend antreibt,
**dadurch gekennzeichnet, dass** der Drehantrieb (70) ein mit dem Elektromotor (8) verbundenes, untersetzendes Exzentergetriebe (20) aufweist und die Spindel (13) mit dem Exzentergetriebe (20) gekoppelt ist.

2. Handwerkzeugmaschine (100) nach Anspruch 1,
**dadurch gekennzeichnet, dass** das Exzentergetriebe (20) ein innenverzahntes Hohlrad (30) und ein außenverzahntes Innenrad (31) aufweist, wobei das Hohlrad (30) bezüglich des Elektromotors (8) gestellfest angeordnet ist, und das Innenrad (31) über einen drehbar gelagerten Exzenter (33) angetrieben wird.

3. Handwerkzeugmaschine (100) nach Anspruch 2,
**dadurch gekennzeichnet, dass** das Exzentergetriebe (20) ein drehstarre Kupplung aufweist (35), die ausgebildet ist einen durch den Exzenter (33) bewirkten Radialversatz des Innenrads (31) auszugleichen.

4. Handwerkzeugmaschine (100) nach Anspruch 2,
**dadurch gekennzeichnet, dass** die Kupplung (35) als Parallelkurbelkupplung oder als Kreuzschieberkupplung ausgebildet ist.

5. Handwerkzeugmaschine (100) nach Anspruch 1,
**dadurch gekennzeichnet, dass** das Schlagwerk (50) eine Getriebekomponente (17) zum Wandeln der Drehbewegung des Elektromotors (8) in eine zu der Arbeitsachse (3) parallele periodische Translationsbewegung aufweist.

6. Handwerkzeugmaschine (100) nach einem der vorangehenden Ansprüche,
**dadurch gekennzeichnet, dass** die Getriebekomponente (17) mit dem Exzentergetriebe (20) integriert ist.

7. Handwerkzeugmaschine (100) nach Anspruch 5 oder 6,
**dadurch gekennzeichnet, dass** die Getriebekomponente (17) ein Schlagwerks-Exzenterrad (21) oder eine Taumelscheibe aufweist, die koaxial zum Exzentergetriebe (20) angeordnet und/oder einstückig mit einem Exzenter (33) des Exzentergetriebes (20) ausgebildet ist.

8. Handwerkzeugmaschine (100) nach einem der vorangehenden Ansprüche,
**dadurch gekennzeichnet, dass** der Drehantrieb (70) mit dem Schlagwerk (50) synchronisiert ist.

9. Handwerkzeugmaschine (100) nach einem der vorangehenden Ansprüche,
**dadurch gekennzeichnet, dass** Exzentergetriebe (20) eine Untersetzung von wenigstens 1:40, vorzugsweise von 1:50 aufweist.

10. Handwerkzeugmaschine (100) nach einem der Ansprüche 7 bis 9,
**dadurch gekennzeichnet, dass** eine den Exzenter (33) tragende Exzenterwelle (34) identisch, oder zumindest koaxial einer Kurbelwelle 25 des Elektromotors (8) ausgebildet bzw. angeordnet ist.

11. Handwerkzeugmaschine (100) nach einem der vorangehenden Ansprüche,
**dadurch gekennzeichnet, dass** das Schlagwerk (50) einen mit der Getriebekomponente verbundenen Erreger (14) und eine pneumatische Kammer (18) aufweist, wobei der Schläger (15) über die pneumatische Kammer (18) an den Erreger (14) angekoppelt ist.
